# EUROPÄISCHE PATENTSCHRIFT

(11) **EP 0 477 923 B1**
(45) Veröffentlichungstag und Bekanntmachung des Hinweises auf die Patenterteilung: **08.12.1993**
(21) Anmeldenummer: 91116370.7
(22) Anmeldetag: 25.09.1991
(51) Int. Cl.: F02M 31/12, F02M 53/06

(54) **Einspritzverbrennungsmotor mit elektrischer Funkenzündung und Heizungsvorrichtung**
Injection internal combustion engine with electrical spark ignition and heating unit
Moteur à combustion interne à injection, allumage par étincelle et dispositif de réchauffage

(30) Priorität: 28.09.1990 NL 9002129
(43) Veröffentlichungstag der Anmeldung: 01.04.1992
(73) Patentinhaber: MERCEDES-BENZ AG, 70327 Stuttgart (DE)
(72) Erfinder: Henke, Jürgen, W-7314 Wernau (DE); Spinner, Erwin, W-7022 Leinfelden (DE); Früh, Peter, W-7056 Weinstadt (DE)

(56) Entgegenhaltungen:
- DE-C- 3 921 739
- FR-A- 2 567 965
- US-A- 3 930 477
- PATENT ABSTRACTS OF JAPAN vol. 10, no. 216 (M-502)(2272) 29. Juli 1986 & JP-A-61 055 356 ( TOYTA MOTOR CO ) 19. April 1986

## Beschreibung

Die Erfindung bezieht sich auf einen Einspritzverbrennungsmotor mit elektrischer Funkenzündung gemäß den Merkmalen des 1. Patentanspruchs.

Aus der DE 39 21 739 C1 ist ein Einspritzverbrennungsmotor bekannt, welcher wenigstens einen mit einem Lufteinlaßkanal versehenen Zylinder, wenigstens ein in dem Zylinderkopf vorgesehenes Einlaßventil, wenigstens einen Treibstoffinjektor und ein stromabwärts von diesem Injektor angebrachtes Heizungselement mit Heatsink und mit einer oder mehreren daran angebrachten PTC-Tabletten umfaßt. Das Heizungselement ist in der Weise durch eine Öffnung in der Wand des Zylinderkopfes oder Lufteinlaßkanals angebracht, daß der Heatsink in den Treibstoffgemischeinlaßkanal hineinragt.

Weiterhin sind aus der DE-C-34 26 469 und der NL-A-8801334 Einspritzverbrennungsmotoren mit elektrischen Heizungselementen zur Vorwärung des angesaugten Kraftstoff-Luftgemisches bekannt.

Es hat sich herausgestellt, daß von dem gesamten Abgasausstoß etwa 50 % in der kurzen Zeit anfallen, in der der Motor seine Betriebstemperatur noch nicht erreicht hat. Auch Abgaskatalysatoren, die unter normalen Bedingungen die Abgasmenge um etwa 90 % herabsetzen, erreichen diesen Umwandlungsgrad erst, wenn die Betriebstemperatur des Katalysator erreicht ist. Die Umwandlung startet bei einer Temperatur von etwa 300 °C, so daß nach einem Kaltstart die Abgasemission des Motors in einem Katalysator nicht oder kaum verringert wird. Da das Temperaturniveau nicht hoch genug ist, um den Treibstoff (Benzin oder Alkohol) zu verdampfen, muß bei kaltem Motor eine zusätzliche Menge Treibstoff zugeführt werden, um ein brennbares Gemisch zu erhalten. Das führt zu einer hohen Abgasemission. Bei niedrigen Motortemperaturen sind deshalb sowohl der Treibstoffverbrauch wie die Abgasemission relativ hoch. Durch Vorwärmen von Kraftstoff/Luftgemisch wird damit auch eine erhebliche Treibstoffeinsparung realisiert, denn es wird weniger oder kein zusätzlicher Treibstoff eingespritzt. Der Treibstoff wird bei dem eingangs erwähnten Verbrennungsmotor auf das in kürzester Zeit auf die gewünschte Temperatur gebrachte Heizungselement gespritzt und wird dabei auf die gewünschte Temperatur gebracht. Der Treibstoff wird dadurch besser verdampfen und es wird ebenfalls eine bessere Mischung mit der Verbrennungsluft realisiert. Das Heizungselement wird abgeschaltet, wenn der Motor warm genug ist, daß er die Verdampfung des Treibstoffs übernehmen kann.

Bei dem aus der genannten DE-C-3426469 bekannten Motor ist das Heizungselement in Form eines in den Einlaßkanal des Zylinders hineinragenden Rohrs ausgebildet, das von einem Isolationsrohr umgeben ist. Das Rohr und das Isolationsrohr sind mit einem Randflansch versehen, die beide in einer Aussparung des Zylinderkopfs liegen und von der Lufteinlaßleitung fixiert werden. Ein Problem bei dieser Ausführung ist, daß das Anbringen und Auswechseln des Heizungselementes ein zeitaufwendiges Unterfangen ist. Dasselbe Problem gibt es bei dem Motor nach der niederländischen NL-A-8801334, wo das Heizungselement in einer Platte integriert ist, die zwischen den Einlaßkanal und den Kopf des Zylinders eingeklemmt wird.

Es ist Aufgabe der Erfindung, bei einem Einspritzverbrennungsmotor mit mindestens einem Heizungselement in mindestens einem Lufteinlaßkanal eines Zylinders das Heizungselement derart weiter zu bilden, daß bei nur geringen Strömungswiderständen im Lufteinlaßkanal die Übertragung der Wärme vom Heatsink in den Kraftstoff bzw. das Kraftstoff-Luftgemisch verbessert und dessen Montage sowie Austausch vereinfacht ist.

Erfindungsgemäß wird die Aufgabe durch die Merkmale des Patentanspruches 1 gelöst.

Durch die Ausbildung des Heatsinks als flache Dose, die mit ihren größeren Flächen parallel zum Einlaßluftstrom ausgerichtet ist, bewirkt diese nur einen geringen Strömungswiderstand im Lufteinlaßkanal. In Verbindung mit an der Dose angebrachter und ungefähr parallel zum Lufteinlaßstrom ausgerichteter Flossen ergibt sich dabei eine Vergrößerung der beheizten Oberfläche, durch die ferner eine bessere Übertragung der Wärme vom Heatsink auf den Luftstrom sowie den eingespritzten Kraftstoff erreicht wird.
Desweiteren wird durch die Ausbildung des Heatsinks als flache Dose -trotz der angeformten Flossen- ein relativ schlankes Bauelement erzielt, das sich als steckbarer Einsatzkörper für eine Einzelmontage durch eine Öffnung in der Kanalwand des Lufteinlaßkanals optimal eignet.

Die Erfindung ist außerordentlich geeignet für einen Einspritzmotor mit zwei Einlaßventilen pro Zylinder, wobei eine Trennwand die Einlaßleitung für Treibstoff in zwei Hälften aufteilt, die jeweils auf ein Einlaßventil münden. Bei einem solchen Motor besteht im kalten Zustand die Gefahr, daß der Treibstoff an der kalten Trennwand kondensiert. Indem erfindungsgemäß der Heatsink in das Profil der Trennwand gerade vor dieser Trennwand eingesetzt wird, wird diese Gefahr vermieden.

Die Erfindung wird nun anhand der Figuren näher erläutert werden.

Figur 1 zeigt einen Schnitt des Teils eines erfindungsgemäßen Verbrennungsmotors.

Figur 2 zeigt eine Draufsicht des Heizungselementes und der Trennwand in dem Treibstoff-Luft-Gemisch-Kanal, wobei die Innenfläche der Einlaßkanäle für Luft und der Treibstoff mit einfachen Linien dargestellt sind.

Figur 3 zeigt die Ansicht des Heizungselements.

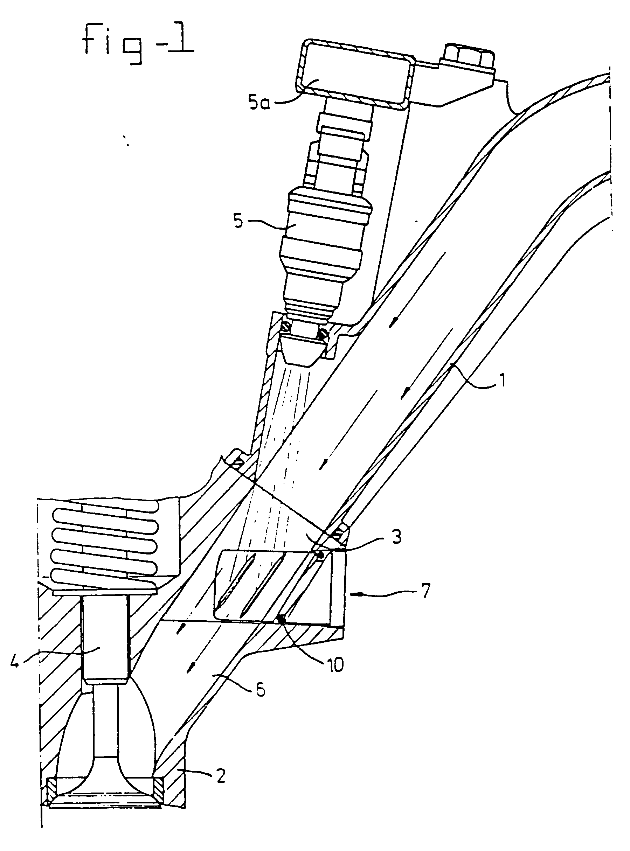

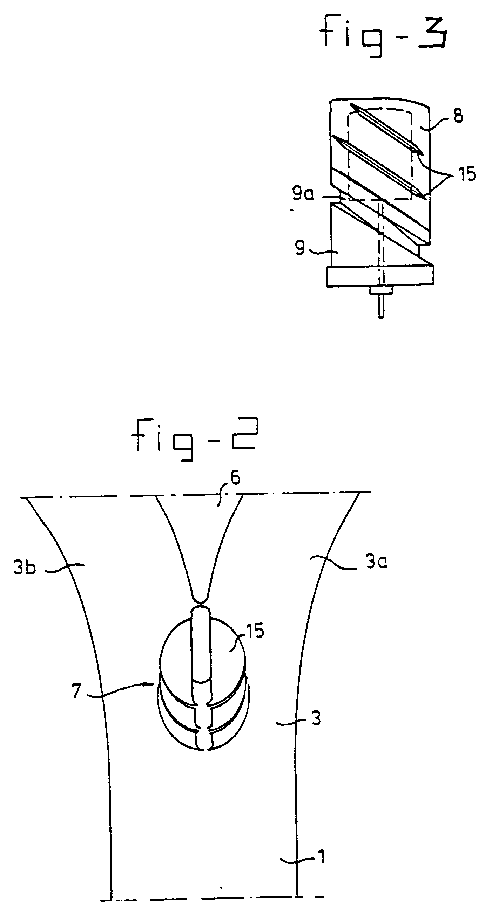

Der in den Figuren 1 und 2 gezeigte Teil eines Einspritzmotors umfaßt einen Lufteinlaßkanal 1, der in der Weise an einem Zylinderkopf 2 befestigt ist, daß er an einen Kanal 3 anschließt, um ein Treibstoffluftgemisch über zwei Einlaßventile 4 in den Zylinder einzuleiten.

An den Lufteinlaßkanal 1 ist ein an einen Treibstoffzufuhrkanal 5a angeschlossener Injektor 5 zur Einspritzung des Treibstoffs befestigt.

In dem Kanal 3 ist eine Trennwand 6 mitgegossen, die, wie Figur 2 zeigt, in der Stromaufwärtsrichtung keilförmig ausläuft und den Kanal 3 in zwei Teilkanäle 3a, 3b aufteilt.

Um den Treibstoff heim kalten Motor auf die gewünschte Temperatur zu bringen, wird dieser beim Einspritzen auf ein Heizungselement 7 gespritzt. Dieses Heizungselement 7 ragt durch eine Öffnung im Zylinderkopf hindurch in den Kanal 3 hinein. Nicht ausgeschlossen ist, daß das Heizungselement 7 durch eine Öffnung hindurch in den Lufteinlaßkanal 2 hineinragt, selbstverständlich an einer Stelle, an der der eingespritzte Treibstoff mit dem Element 7 in Berührung kommt.

Das Heizungselement 7 umfaßt einen Heatsink 8 in Form einer hohlen flachen Dose, die in das Profil der Trennwand 6 gerade vor deren stromaufwärts gelegenen Ende angeordnet ist.

Auf der Außenseite der flachen Heatsink-Dose sind zwei schräge Flossen 15 angegossen, die, wie Figur 1 zeigt, in dem montierten Zustand des Heizungselementes parallel zu der mit Pfeilen angegebenen Luftströmungsrichtung verlaufen. Die Zufuhrrichtung des eingespritzten Treibstoffs verläuft jedoch so schräg gegenüber den Flossen 15, daß der Treibstoff auf die Flossen gespritzt wird. Damit wird erreicht, daß die Wärmeübertragung vom Heatsink 8 auf den Treibstoff sehr effizient erfolgt, ohne den Widerstand gegen den Luftstrom in nennenswerter Weise zu steigern.

Zusätzliche Vorteile der beschriebenen Konstruktion sind, daß das Heizungselement einfach und kostengünstig hergestellt werden kann und sich äußerst einfach montieren und auswechseln läßt.

Die Erfindung findet auch Anwendung auf einen Motor mit einem einzigen Einlaßventil pro Zylinder, jedoch ist sie bei einem Motor mit zwei Einlaßventilen pro Zylinder besonders vorteilhaft.

## Patentansprüche

1. Einspritzverbrennungsmotor mit elektrischer Funkenzündung, welcher wenigstens einen mit einem Lufteinlaßkanal (1) versehenen Zylinder, wenigstens ein in dem Zylinderkopf (2) vorgesehenes Einlaßventil (4), auf einer ersten Seite des Lufteinlaßkanals (3) wenigstens einen Treibstoffinjektor (5) und stromab von diesem Injektor ein Heizungselement (7) aufweist, das einen als hohle flache Dose ausgebildeten Heatsink (8) und ein oder mehrere daran angebrachte PTC-Tabletten (11a, 11b) umfaßt, wobei das Heizungselement (7) durch eine Öffnung in einer Wand des Zylinderkopfes (2) in dem Lufteinlaßkanal (3) eingesetzt ist, so daß der als flache Dose ausgebildete Heatsink (8) auf der der ersten Seite gegenüberliegenden Seite des Lufteinlaßkanals (3) liegt, derart, daß die flache Dose mit ihren größeren Flächen sich parallel zum Einlaßluftstrom erstreckt, wobei von der Dose (Heatsink 8) im wesentlichen parallel zum Einlaßluftstrom im Lufteinlaßkanal (3) verlaufende Flossen (15) abstehen, auf deren dem Treibstoffinjektor (5) zugewandeten Flächen Kraftstoff aufgespritzt wird.

2. Verbrennungsmotor nach Anspruch 1 mit zwei Einlaßventilen (4) pro Zylinder, einer Trennwand (6), die den Lufteinlaßkanal (3) in zwei Hälften (3a, 3b) teilt, die jeweils auf ein Einlaßventil (4) münden,
**dadurch gekennzeichnet,**
daß der Heatsink (8) sich in dem Profil der Trennwand (6) gerade vor dieser Trennwand befindet.

## Claims

1. Injection internal combustion engine with electric spark ignition which has at least one cylinder provided with an air inlet duct (1), at least one inlet valve (4) provided in the cylinder head (2), at least one fuel injector (5) on a first side of the air inlet duct (3) and, downstream of this injector, a heating element (7) which includes a heat sink (8) designed as a hollow flat box and one or more PTC tablets (11a, 11b) mounted thereon, the heating element (7) being inserted through an opening in a wall of the cylinder head (2) in the air inlet duct (3) so that the heat sink (8) designed as a flat box lies on the side of the air inlet duct (3) situated opposite the first side in such a manner that the flat box extends with its greater surfaces parallel to the incoming air flow, fins (15), extending substantially parallel to the incoming air flow in the air inlet duct (3), protruding from the box (heat sink 8), fuel being sprayed on the faces of said fins facing the fuel injector (5).

2. Internal combustion engine according to claim 1, with two inlet valves (4) per cylinder, a partition (6) which divides the air inlet duct (3) into two halves (3a, 3b) respectively opening out onto an inlet valve (4), characterized in that the heat sink (8) is situated in the profile of the partition (6) precisely in front of the said partition.

## Revendications

1. Moteur à injection avec allumage électrique par étincelles, qui comporte au moins un cylindre pourvu d'un canal (1) d'admission d'air, au moins une soupape d'admission (4) prévue dans la culasse (2), sur un premier côté du canal (3) d'admission d'air au moins un injecteur de carburant (5) et, en aval de cet injecteur, un élément de chauffage (7), qui comprend un évacuateur de chaleur (8) agencé sous forme d'un boîtier plat creux ainsi qu'une ou plusieurs tablettess-PTC (11a, 11b) disposées sur ce dernier, l'élément chauffant (7) étant disposé, à travers une ouverture prévue dans une paroi de la culasse (2), dans le canal (3) d'admission d'air de telle sorte que l'évacuateur de chaleur (8), agencé sous forme d'un boîtier plat, soit situé du côté du canal (3) d'admission d'air qui est opposé au premier côté de telle manière que le boîtier plat s'étende avec ses grandes surfaces parallèlement à l'écoulement d'air d'admission, et il est prévu à partir du boîtier (évacuateur de chaleur 8) des palettes (15) orientées dans l'essentiel parallèlement à l'écoulement d'air d'admission dans le canal (3) d'admission d'air et comportant des surfaces dirigées vers l'injecteur de carburant (5) sur lesquelles est pulvérisé du carburant.

2. Moteur à injection selon la revendication 1, comportant deux soupapes d'admission (4) par cylindre, une paroi séparatrice (6), qui divise le canal (3) d'admission d'air en deux moitiés (3a, 3b) qui débouchent chacune sur une soupape d'admission (4), caractérisé en ce que l'évacuateur de chaleur (8) est situé, dans le profil de la paroi séparatrice (6), directement en avant de cette paroi séparatrice.
